# EUROPÄISCHE PATENTSCHRIFT

(11) **EP 3 172 456 B1**
(45) Veröffentlichungstag und Bekanntmachung des Hinweises auf die Patenterteilung: **27.03.2019**
(21) Anmeldenummer: 15738096.5
(22) Anmeldetag: 16.07.2015
(51) Int. Cl.: F16D 51/20, F16D 65/08, F16D 65/46

(54) **BREMSSYSTEM**
BRAKING SYSTEM
SYSTÈME DE FREINAGE

(30) Priorität: 21.07.2014 DE 102014214098
(43) Veröffentlichungstag der Anmeldung: 31.05.2017
(73) Patentinhaber: SAF-HOLLAND GmbH, 63856 Bessenbach (DE)
(72) Erfinder: DREWES, Olaf, 63743 Aschaffenburg (DE); BIEWER, Frederik, 63808 Haibach (DE)
(74) Vertreter: Müller Schupfner & Partner Patent- und Rechtsanwaltspartnerschaft mbB
(86) Internationale Anmeldenummer: PCT/EP2015/066235
(87) Internationale Veröffentlichungsnummer: WO 2016/012332

(56) Entgegenhaltungen:
- EP-A2- 1 116 896
- AU-B2- 590 284
- US-A- 3 744 595
- US-A- 4 369 863
- US-E- R E17 899

## Beschreibung

Die vorliegende Erfindung betrifft ein Bremssystem insbesondere eine Spreizkeil-Trommelbremse zum Einsatz in Nutzfahrzeugen.

Es ist aus dem Stand der Technik bekannt, in Bremssystemen wie beispielsweise einer Spreizkeil-Trommelbremse für Nutzfahrzeuge, eine Nachstellvorrichtung einzurichten welche den Verschleiß der Bremsbeläge der Bremse kompensiert, um auch bei zunehmendem Verschleiß eine möglichst gleichbleibende Bremscharakteristik zu erreichen. An dieser Nachstellvorrichtung ist beispielsweise ein Schraubelement vorgesehen, welches in ein entsprechendes Gewinde eingreift und durch Drehung relativ zu dem Gewinde einen Verschleiß der Bremsbeläge an den Bremsbacken der Spreizkeil-Trommelbremse ausgleicht. Dabei legt das Schraubelement durch seinen Eingriff in das Gewinde einen Nachstellweg zurück, welcher im Wesentlichen der Abnahme der Dicke der Bremsbeläge entspricht. Die aus dem Stand der Technik bekannten Lösungen zur Verdreh-Sicherung des Schraubelements der Nachstellvorrichtung haben sich daher als nachteilig erwiesen, weil an ihnen unerwünschte Gleitreibung auftritt, welche einen Verschleiß der beteiligten Bauteile verursacht und es unter Umständen auch zu einem Verkanten an den Kraft übertragenden Elementen der Spreizkeil-Trommelbremse kommen kann.

Die US-4,369,863 betrifft Trommelbrems-Systeme, bei welchen die Bremsbacken derart ausgelegt sind, dass sie durch ein Stegelement mit verschiedenen Betätigungssystemen in Eingriff gebracht werden können.

Die AU 590 284 B2 betrifft eine Trommelbremse, bei welcher die Bremsbacken über einen S-Nocken, welcher auf entsprechenden Wälzkörpern abrollt, betätigt werden können.

Die DE 7 246 133 U offenbart verschiedene Ausführungsvarianten einer Trommelbremse, an welcher zwei Betätigungseinheiten zum Einsatz gelangen, um die Bremsbacken der Trommelbremse an jeweils beiden Enden mit einer Kraft zu beaufschlagen.
Aufgabe der vorliegenden Erfindung ist die Bereitstellung eines Bremssystems, welches die Funktion einer Nachstellvorrichtung mit einer optimalen Kraftübertragung der Bremskraft bei geringem Verschleiß und möglichst geringen Bauteilgewicht kombiniert.

Diese Aufgabe wird gelöst mit einem Bremssystem gemäß Anspruch 1. Weitere Vorteile und Merkmale der vorliegenden Erfindung ergeben sich aus den abhängigen Ansprüchen.

Erfindungsgemäß umfasst das Bremssystem, welches vorzugsweise als Spreizkeil-Trommelbremse ausgebildet ist, eine Bremsbacke und eine Spreizkeileinheit, wobei die Bremsbacke ein erstes Stegelement aufweist, wobei die Spreizkeileinheit ein Schraubelement aufweist, welches um eine Drehachse, drehbar an der Spreizkeileinheit, angeordnet ist, wobei die Bremsbacke einen Kraftübertragungsabschnitt aufweist, welcher eine von der Spreizkeileinheit aufgebrachte Bremskraft an die Bremsbacke überträgt, wobei das erste Stegelement einen Sicherungsabschnitt aufweist, der das Schraubelement gegen Verdrehung um die Drehachse sichert. Mit Vorteil umfasst das Bremssystem zwei Bremsbacken, welche an je einer Seite der Spreizkeileinheit angeordnet sind und durch eine von der Spreizkeileinheit aufgebrachte Betätigungskraft voneinander entfernt werden, so dass sie in Eingriff mit der Innenseite einer Bremstrommel gelangen. Für die Beschreibung des erfindungsgemäßen Bremssystems ist im Folgenden die Beschreibung des Zusammenspiels zwischen einer Bremsbacke und der Spreizkeileinheit ausreichend. Die Spreizkeileinheit weist ein Schraubelement auf, welches bevorzugt Teil einer Nachstelleinrichtung ist. Besonders bevorzugt ist dabei das Schraubelement ein drehbar an der Nachstellvorrichtung gelagertes bolzenförmiges Element mit einem Außengewinde, welches mit einem weiteren Element der Nachstellvorrichtung in Eingriff steht, wobei ein Verdrehen des mit dem Schraubelement korrespondierenden Elements zu einer Verlagerung des Schraubelements längs einer Drehachse führt. Dabei sichert die Spreizkeileinheit das Schraubelement nicht gegen eine Verdrehung um die Drehachse. Es ist daher im Rahmen der vorliegenden Erfindung vorgesehen, dass die Bremsbacke ein erstes Stegelement mit einem Sicherungsabschnitt aufweist, wobei der Sicherungsabschnitt des ersten Stegelements das Schraubelement gegen Verdrehung um die Drehachse sichert. Erfindungsgemäß weist die Bremsbacke ein erstes Stegelement und ein zweites Stegelement auf, wobei an beiden Stegelementen ein Sicherungsabschnitt vorgesehen ist. Der Sicherungsabschnitt ist dabei beispielsweise ein Bereich des Steges des Stegelements, welcher dazu geeignet ist, mit dem Schraubelement der Spreizkeileinheit derart in Eingriff zu gelangen, dass das Schraubelement gegen Verdrehung um eine Drehachse gesichert ist. Dabei ist vorzugsweise ein formschlüssiger Eingriff zwischen dem Sicherungsabschnitt und dem Schraubelement vorgesehen. Das Schraubelement ist vorzugsweise ein bolzen- oder (hohl-)zylinderförmiger Körper, welcher ein Gewinde aufweist und ist insbesondere bevorzugt ein Teil einer Nachstelleinrichtung für eine Spreizkeileinheit einer Spreizkeil-Trommelbremse. Das erste Stegelement ist vorzugsweise ein blechartig ausgebildetes und gekrümmtes Bauteil und dient insbesondere als Träger für ein weiteres gebogenes blechförmiges Element an welchem der Bremsbelag der Bremsbacke festlegbar ist. Das erste Stegelement übernimmt somit im Rahmen der vorliegenden Erfindung vorteilhafter Weise sowohl die Aufgabe das sogenannte Belagblech, an welchem der Bremsbelag festlegbar oder festgelegt ist, zu stützen als auch die Aufgabe das Schraubelement der Spreizkeileinheit gegen Verdrehung um die Drehachse zu sichern. Die Drehachse ist mit Vorteil die Achse entlang derer die vorzugsweise kolbenförmig ausgebildeten Bauteile bzw. Elemente der Spreizkeileinheit verlagert werden, welche die Bremsbacke gegen die Innenseite der Bremstrommel pressen. Somit ist die Drehachse vorteilhafter Weise auch die Achse entlang derer die Kraft von der Spreizkeileinheit an die Bremsbacke übertragen wird. Das Schraubelement ist mit Vorteil derart an einen korrespondierenden und mit einem Gewinde ausgestatteten Bauteil angeordnet, dass ein Verdrehen des Schraubelements gleichzeitig zu einer Verlagerung des Schraubelements längs der Drehachse führt. Umgekehrt führt ein Verdrehen des mit dem Schraubelement korrespondierenden Bauteils wie bspw. einer Nachstellmutter bei Verhindern einer Verdrehung des Schraubelements um die Drehachse zu einer Verlagerung des Schraubelements längs der Drehachse. Im Rahmen der vorliegenden Erfindung ist es vorgesehen, dass das Schraubelement bei Eingriff des Sicherungsabschnitts gegen Verdrehung um die Drehachse gesichert ist, d.h. also sich im Wesentlichen nicht um die Drehachse dreht, um insbesondere Bauteile einzusparen und eine einfache robuste Konstruktion des Bremssystems zu erreichen ist es im Rahmen der vorliegenden Erfindung vorgesehen, dass der Sicherungsabschnitt des ersten Stegelements diese Drehsicherungsfunktion übernimmt und somit kein zusätzliches Sicherungselement wie beispielsweise ein Splint, erforderlich ist. Darüber hinaus weist die Bremsbacke einen Kraftübertragungsabschnitt auf, welcher die von der Spreizkeileinheit aufgebrachte Bremskraft an die Bremsbacke überträgt und diese mit Vorteil gegen die Innenseite einer Bremstrommel presst. Im Rahmen der vorliegenden Erfindung ist also eine Funktionstrennung zwischen der Verdrehsicherung des Schraubelements und der Kraftübertragung zwischen Spreizkeileinheit und Bremsbacke vorgesehen. Durch diese Funktionstrennung der Verdrehsicherung und der Kraftübertragung kann insbesondere ein Verkeilen der beteiligten Bauteile wie erstes Stegelement, Schraubelement und Kraftübertragungsabschnitt verhindert werden. Gleichzeitig wird der Kraftübertragungsabschnitt optimiert für die reine Kraftübertragung, d.h. also dass durch den Kraftübertragungsabschnitt keinerlei um die Drehachse wirkenden Kräfte übertragen werden, wodurch der Kraftübertragungsabschnitt nur die Normalkräfte, welche zwischen der Spreizkeileinheit und der Bremsbacke wirken überträgt. Auf diese Weise kann der Verschleiß des Bremssystems und insbesondere an den kraftübertragenden Bereichen zwischen Spreizkeileinheit, Schraubelement und Bremsbacke deutlich verringert werden, da weniger und vorzugsweise keine ungewollte Gleitreibung zwischen den beteiligten Flächen der Spreizkeileinheit und der Bremsbacke auftritt.

Insbesondere bevorzugt hat der Sicherungsabschnitt keinen Anteil an der Übertragung der Bremskraft. Bei dieser besonders bevorzugten Ausführungsform wird die Bremskraft zwischen der Spreizkeileinheit und der Bremsbacke also lediglich über den Kraftübertragungsabschnitt übertragen während der Sicherungsabschnitt des ersten Stegelements zu dieser Übertragung der Bremskraft keinen Anteil leistet. Es ist auf diese Weise möglich den Sicherungsabschnitt und insbesondere die Geometrie des Sicherungsabschnitts für die Verdrehsicherung d.h. für das Aufbringen eines Moments bzw. einer Umfangskraft, welche das Schraubelement gegen Verdrehung um die Drehachse sichert, zu optimieren während der Sicherungsabschnitt im Wesentlichen keine weiteren Kräfte aufnehmen muss. Auf diese Weise kann insbesondere Gleitreibung am Sicherungsabschnitt und die Gefahr eines Verkantens des Sicherungsabschnitts an dem Schraubelement der Spreizkeileinheit verringert oder sogar verhindert werden. Gleichzeitig ist der Kraftübertragungsabschnitt an der Bremsbacke mit Vorteil optimal zur Übertragung von Normalkräften ausgelegt, so dass lediglich die Bremskraft übertragen wird während eine Verdrehsicherung des Schraubelements durch den Kraftübertragungsabschnitt der Bremsbacke nicht übernommen wird.

Mit Vorteil greift der Sicherungsabschnitt in einem Eingriffsabschnitt am Schraubelement ein, wobei der Eingriffsabschnitt eine geradlinige Erstreckung quer zur Drehachse aufweist. Vorzugsweise ist der Eingriffsabschnitt des Schraubelements eine Außenfläche des Schraubelements die zumindest in einer Richtung quer zur Drehachse geradlinig oder eben ist. Mit anderen Worten bedeutet dies, dass das Schraubelement eine Außenfläche aufweist die als Eingriffsabschnitt für einen vorzugsweise formschlüssigen Eingriff mit dem Sicherungsabschnitt des ersten Stegelements ausgelegt bzw. geeignet ist, wobei diese Außenfläche sich zumindest in eine Richtung geradlinig oder eben erstreckt. Dabei kann vorzugsweise in den quer zu dieser geradlinigen Erstreckungsrichtung verlaufenden Richtungen eine leichte Krümmung am Eingriffsabschnitt des Schraubelements vorgesehen sein um insbesondere eine leichte Pendelbewegung der Bremsbacke relativ zur Spreizkeileinheit aufnehmen zu können. Diese leichten Pendelbewegungen der Bremsbacke treten auf, wenn die Bremsbacke im Betrieb der Bremse gegen die Innenseite der Bremstrommel gepresst wird und die Bremstrommel sich aufweitet und dabei eine leicht kegelförmige Form annimmt. Die Bremsbacke erfährt hierdurch wiederum eine leichte Schrägstellung. Im Rahmen der vorliegenden Erfindung ist dabei eine Pendelbewegung der Bremsbacke im Bereich von 1 Grad bis 7 Grad vorzugsweise von 2 Grad bis 5 Grad aus der Schwenkebene der Bremsbacken heraus vorgesehen und kann durch einen entsprechend ausgelegten Eingriffsabschnitt des Schraubelements ohne Weiteres aufgenommen werden. Die Schwenkebene der Bremsbacken ist mit Vorteil die Ebene, entlang derer die Bremsbacken von der Spreizkeileinheit verlagert und gegen die Bremstrommel gepresst werden. Indem der Eingriffsabschnitt derart ausgelegt ist, dass er leichte Pendelbewegungen der Bremsbacke aufnehmen kann wird gleichzeitig verhindert, dass es zu einem Verkanten des Eingriffsabschnitts mit dem Sicherungsabschnitt kommt.

In einer weiteren bevorzugten Ausführungsform weist der Sicherungsabschnitt und/oder der Eingriffsabschnitt eine im Wesentlichen planare Fläche auf. Als planare Fläche wird in diesem Zusammenhang eine Fläche angesehen, die im Wesentlichen vollständig in einer Ebene liegt bzw. deckungsgleich oder parallel zu einer Ebene ist. Im Wesentlichen planar bedeutet dabei, dass Fertigungstoleranzen und auch geringe Materialverformungen während des Einsatzes des Bremssystems Abweichungen von der planaren Geometrie bewirken können, welche aber im Rahmen der vorliegenden Erfindung zulässig sind. Dabei ist es besonders bevorzugt, dass der Sicherungsabschnitt eine im Wesentlichen planare Fläche aufweist während der Eingriffsabschnitt am Schraubelement vorzugsweise in eine Richtung eine geradlinige Erstreckung und in jeweils quer zu dieser Richtung liegenden Richtungen eine leichte Krümmung aufweist, um wie zuvor beschrieben mit Vorteil die Pendelbewegungen der Bremsbacke bzw. Kippbewegungen der Bremsbacke ausgleichen zu können. In einer weiteren besonders bevorzugten Ausführungsform sind sowohl der Sicherungsabschnitt als auch der Eingriffsabschnitt jeweils mit einer planaren Fläche ausgestattet, wobei die planaren Flächen des Sicherungsabschnitts und des Eingriffsabschnitts ein besonders guten Formschluss ermöglichen und somit eine besonders sichere und verlässliche Verdreh-Sicherung für das Schraubelement gewährleisten. Mit anderen Worten ist eine planare Fläche als eine im Wesentlichen ungekrümmte Fläche anzusehen.

Mit Vorteil ist der Kraftübertragungsabschnitt an einer Stützfläche des Schraubelements zur Anlage bringbar, wobei die Stützfläche und/oder der Kraftübertragungsabschnitt sich im Wesentlichen quer zur Drehachse erstreckt. Die Formulierung im Wesentlichen quer zur Drehachse bedeutet im vorliegenden Fall, dass bei einer Verschwenkung der Bremsbacke während des Bremsvorganges verständlicherweise ein leichtes Kippen des Kraftübertragungsabschnitts bezogen auf die Drehachse stattfindet. Dabei soll der dabei auftretende Kippwinkel im Rahmen der vorliegenden Erfindung ebenfalls innerhalb des Bereiches "quer zur Drehachse" liegen. Die Stützfläche des Schraubelements erstreckt sich dabei vorzugsweise senkrecht zur Drehachse während der Kraftübertragungsabschnitt eine ebenfalls im Wesentlichen senkrecht zur Drehachse ausgerichtete Fläche aufweist, welche jedoch während des Bremsvorgangs geringfügig ausgehend von der Senkrechten zur Drehachse relativ zur Drehachse verschwenkt wird. Der besondere Vorteil der senkrechten Ausrichtung der Stützfläche und der entsprechend korrespondierenden Fläche des Kraftübertragungsabschnitts ist eine im Wesentlichen parallel zur Drehachse erfolgende Kraftübertragung. Dabei tritt mit Vorteil keine oder nur eine sehr geringfügig quer zur Drehachse wirkende Kraftkomponente auf. Hierbei kommt es vorteilhafter Weise zu kaum oder gar keiner Gleitreibung bzw. quer zu den jeweiligen Kraftübertragungsflächen wirkenden Schubkräften und der Verschleiß am Bremssystem kann deutlich verringert werden. Somit ist der Kraftübertragungsabschnitt und die entsprechende Stützfläche am Schraubelement nicht nur unabhängig von der Verdreh-Sicherung des Schraubelements, sondern er ist auch noch derart ausgelegt, dass möglichst nur Normalkräfte zu den jeweils korrespondierenden Kraftübertragungsflächen am Kraftübertragungsabschnitt und an der Stützfläche auftreten wodurch der Verschleiß durch Reibung oder Oberflächenabrasion deutlich verringert werden kann.

Bevorzugt umfasst der Kraftübertragungsabschnitt einen Wälzkörper, welcher drehbar an der Bremsbacke gelagert ist und an dem Schraubelement abrollt. Besonders bevorzugt rollt der Wälzkörper dabei an der Stützfläche des Schraubelements ab. Der Wälzkörper ist vorzugsweise drehbar im Bereich des Kraftübertragungsabschnitts der Bremsbacke gehalten oder abgestützt und überträgt die von der Spreizkeileinheit aufgebrachte Kraft an die Bremsbacke. Insbesondere bevorzugt weist der Wälzkörper dabei eine zylindrische oder leicht ballige bzw. tonnenförmige Außengeometrie auf, wobei insbesondere die Zylinder- oder Rotationsachse des Wälzkörpers quer bzw. vorzugsweise senkrecht zur Drehachse des Schraubelements ausgerichtet ist. Der Wälzkörper erreicht, dass die von der Spreizkeileinheit und insbesondere bevorzugt vom Schraubelement übertragene Bremskraft senkrecht auf den Wälzkörper wirkt während der Wälzkörper gleichzeitig die Schwenkbewegung der Bremsbacke während des Bremsvorganges ausgleicht und lediglich unter auftretender Rollreibung die Bremskraft an die Bremsbacke überträgt. Besonders bevorzugt stützt sich der Wälzkörper dabei an einer Platte als Kraftübertragungsgeometrie an der Bremsbacke ab während im Bereich der drehbaren Lagerung des Wälzkörpers keiner oder nur ein geringer Anteil, mit Vorteil nur 1 - 10 %, der Bremskraft aufgenommen wird. Auf diese Weise lässt sich die Reibung des Wälzkörpers im Bereich seiner drehbaren Lagerung an der Bremsbacke bzw. an dem ersten Stegelement und dem zweiten Stegelement verringern. Mit Vorteil weist die Platte der Bremsbacke eine leicht gekrümmte Form auf, wodurch auch bei Verschwenken der Bremsbacke immer eine jeweils geradlinige und senkrechte Kraftübertragung von der Spreizkeileinheit in den Wälzkörper und vom Wälzkörper in die Platte der Bremsbacke gewährleistet ist. Insbesondere bevorzugt überträgt der Wälzkörper ausschließlich eine parallel zur Drehachse wirkende Kraft vom Schraubelement auf die Bremsbacke. Dies bedeutet mit anderen Worten insbesondere, dass der Wälzkörper kein Drehmoment zwischen Spreizkeileinheit und Bremsbacke aufnimmt bzw. überträgt. Somit übernimmt der Wälzkörper vorteilhafter Weise keinerlei Verdrehsicherung sondern dient lediglich der Übertragung einer linearen Kraft zwischen der Spreizkeileinheit und der Bremsbacke, insbesondere bevorzugt von dem Schraubelement auf die Bremsbacke. Auf diese Weise kann mit Vorteil der Oberflächenverschleiß am Wälzkörper und eine Gefahr des Verklemmens des Wälzkörpers an dem Schraubelement während des Einsatzes des Bremssystems verringert werden.

Weiterhin bevorzugt stützt sich der Wälzkörper an seiner dem Schraubelement abgewandten Seite an einer Platte ab, wobei die Platte, die vom Wälzkörper übertragene Bremskraft an die Bremsbacke überträgt. Die drehbare Führung des Wälzkörpers an der entsprechenden Aufnahmegeometrie der Bremsbacke ist dabei vorzugsweise als Langloch ausgelegt, wobei während der Kraftübertragung zwischen der Spreizkeileinheit und der Bremsbacke von diesen Langlöchern bevorzugt keine Bremskraft, oder nur ein vernachlässigbarer Anteil der Bremskraft aufgenommen wird. Mit Vorteil nimmt die Platte die vom Wälzkörper übertragene Bremskraft vollständig auf. Auf diese Weise lässt sich wie zuvor beschrieben die Reibung und der Verschleiß in den Aufnahmebereichen für die drehbare Lagerung des Wälzkörpers verringern.

Erfindungsgemäß weist das Bremssystem ein zweites Stegelement auf, wobei das erste Stegelement und das zweite Stegelement je einen Sicherungsabschnitt aufweisen, wobei die Sicherungsabschnitte vorzugsweise ebenensymmetrisch zu einer zwischen dem ersten und dem zweiten Stegelement angeordneten Ebene ausgerichtet sind. Diese bevorzugte Ausführungsform stellt eine besonders einfache Ausführung des Bremssystems im Rahmen der vorliegenden Erfindung dar, wobei auf einfache Weise an den beiden Stegelementen einer Bremsbacke jeweils ein Sicherungsabschnitt vorgesehen ist, wobei beide Sicherungsabschnitte eine entsprechende Eingriffsgeometrie des Schraubelements mit zumindest zwei korrespondierenden Eingriffsabschnitten in ihre Mitte nehmen und formschlüssig gegen Verdrehung sichern. Besonders bevorzugt kann es hierbei sein, dass das Schraubelement an seiner Außenfläche einen sechskantförmigen Oberflächenverlauf aufweist wobei die Sicherungsabschnitte an dem ersten und dem zweiten Stegelement jeweils mit zwei gegenüberliegenden Flächen der Eingriffsabschnitte an dem Schraubelement eingreifen. Dabei weisen die Sicherungsabschnitte mit Vorteil planare oder zumindest in einer Richtung geradlinig ausgebildete Flächen auf, welche das Schraubelement gegen Verdrehung um die Drehachse sichern. Auf diese Weise kann mit nur geringfügiger Modifizierung der Bremsbacken eines Bremssystems eine Verdrehsicherung für das Schraubelement einer Nachstellvorrichtung einer Spreizkeileinheit bereitgestellt werden welche zum einen, einen geringen Verschleiß aufweist und zum anderen auch eine vorteilhaft ausgebildete Bremsbacke bereitstellt. Die im Rahmen der vorliegenden Erfindung bevorzugte Bremsbacke mit einem ersten und einem vorzugsweise parallel zum ersten angeordneten zweiten Stegelement, weist eine hohe Verwindungssteifigkeit auf, resultierend aus den bei geringem Gewicht sehr hohen Flächenträgheitsmomenten sowohl gegen Biegung als auch gegen Torsion. Die Bremsbacke weist daher eine hohe Formstabilität auch bei den im Nutzfahrzeug üblichen, großen Bremskräften auf.

In einer besonders bevorzugten Ausführungsform ist zwischen dem Sicherungsabschnitt und dem Eingriffsabschnitt ein Überlappungsbereich vorgesehen, welcher eine parallel zur Drehachse gemessene Überlappungslänge aufweist, wobei die Überlappungslänge 0,5 cm bis 8,0 cm, vorzugsweise 0,8 cm bis 4,0 cm, und besonders bevorzugt ca. 1 cm bis 1,5 cm beträgt. Der hier vorgeschlagene Bereich der Überlappungslänge von 0,5 cm bis 8,0 cm stellt dabei den im Rahmen der Erfindung ermittelten bevorzugten Kompromiss zwischen einer ausreichenden Sicherheit gegen herausrutschen der Verdrehsicherung des Schraubelements auf der einen Seite und einem gleichzeitig gering gehaltenen Gewicht des Bremssystems durch vermeiden einer Überdimensionierung des Überlappungsbereiches zwischen dem Sicherungsabschnitt und dem Eingriffabschnitt dar. Dabei hat sich die Untergrenze der Überlappungslänge von 0,5 cm als guter Grenzwert herausgestellt bei welchem die Verdrehsicherung in einem hohen Anteil der Einsatzgebiete mit ausreichender Sicherheit gewährleistet werden kann.

Mit Vorteil steht die Überlappungslänge in einem Verhältnis von 0,2 bis 1,2, vorzugsweise 0,5 bis 1 und besonders bevorzugt von ca. 0,6 bis 0,75 zu einem maximalen Verlagerungsweg des Schraubelements der Betätigungseinheit. Als maximaler Verlagerungsweg des Schraubelements ist im Rahmen der vorliegenden Erfindung vorzugsweise die Summe aus dem durch Nachstellung der Betätigungseinheit resultierenden Weg und dem Betriebsweg des Schraubelements. Der Betriebsweg des Schraubelements ist der Weg, vorzugsweise längs der Drehachse, welcher vom Schraubelement von der Einleitung des Bremsvorganges bis zum Erreichen der maximalen Bremskraft zurückgelegt wird. Der maximale Verlagerungsweg des Schraubelements erzeugt eine bestimmte Verschwenkung der Bremsbacke und verursacht somit auch eine Schrägstellung des Sicherungsabschnitts der Bremsbacke relativ zum Eingriffsabschnitt am Schraubelement. Um auch bei der maximal vorgesehenen Schrägstellung des Sicherungsabschnitts zum Eingriffsabschnitt eine ausreichende Überlappungslänge zur Verfügung zu haben und somit ausreichende Sicherheit gegen Verdrehung des Schraubelements zu gewährleisten ist ein Mindestverhältnis der Überlappungslänge zum maximalen Verlagerungsweg von 0,2 bevorzugt. Gleichzeitig soll eine Überdimensionierung vermieden werden um Gewicht zu sparen und das Verhältnis von Überlappungslänge zum maximalen Verlagerungsweg übersteigt den Wert von 1,2 vorzugsweise nicht. Der bevorzugte Verhältnisbereich von 0,5 bis 1 schafft einen guten Kompromiss aus Sicherheit und geringem Gewicht für Nutzfahrzeuge und Nutzfahrzeuganhänger mittlerer Gewichtsklasse. Der insbesondere bevorzugte Verhältnisbereich von 0,6 bis 0,75 erlaubt einen besonders guten Kompromiss aus Sicherheit und Leichtbauweise für hoch belastete Nutzfahrzeuge, welche insbesondere auch zur Fahrt auf unbefestigten Straßen geeignet sind.

Weitere Vorteile und Merkmale der vorliegenden Erfindung ergeben sich aus der nachfolgenden Beschreibung ausgewählter Ausführungsformen des erfindungsgemäßen Bremssystems in Bezug auf die beigefügten Figuren. Es versteht sich, dass einzelne nur in einer Figur gezeigte Merkmale auch in Ausführungsformen anderer Figuren Anwendung finden können sofern dies nicht explizit ausgeschlossen ist oder sich aufgrund technischer Gegebenheiten verbietet. Es zeigen:
- Fig. 1: eine schematische Ansicht einer bevorzugten Ausführungsform des erfindungsgemäßen Bremssystems,
- Fig. 2a): eine Draufsicht auf eine bevorzugte Ausführungsform des erfindungsgemäßen Schraubelements,
- Fig. 2b): eine Seitenansicht des in Fig. 2a gezeigten Schraubelements,
- Fig. 3: eine Ansicht einer bevorzugten Ausführungsform des erfindungsgemäßen Bremssystems,
- Fig. 4: die in Fig. 3 gekennzeichnete Detailansicht in vergrößerter Darstellung,
- Fig. 5a)-c): teilweise geschnittene Ansichten weiterer bevorzugter Ausführungsformen des erfindungsgemäßen Bremssystems, und
- Fig. 6: eine schematische Ansicht einer Ausführungsform eines Bremssystems.

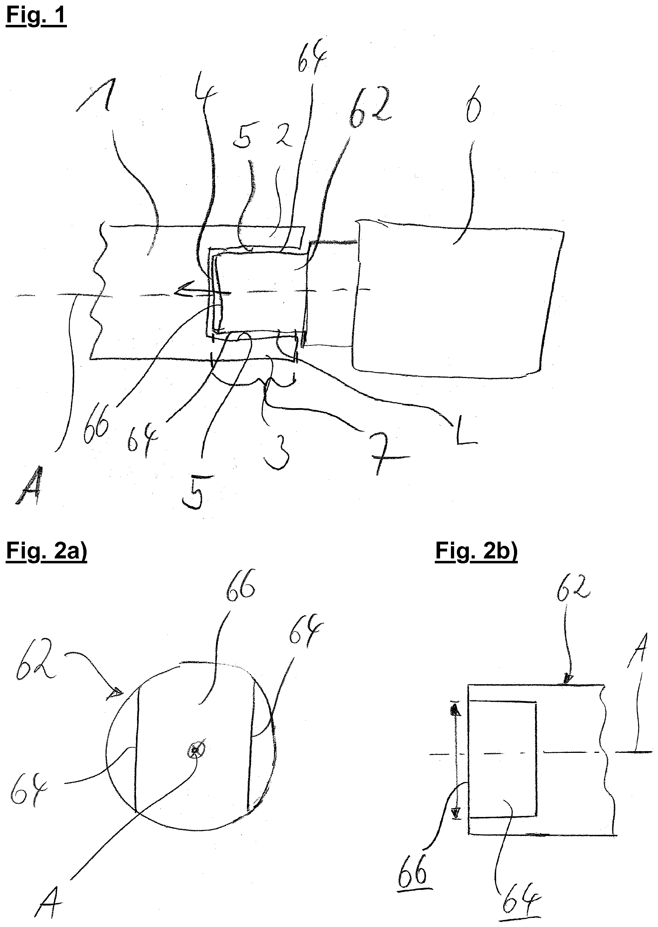

Fig. 1 zeigt eine Bremsbacke 1 mit einem ersten Stegelement 2 und einem zweiten Stegelement 3, wobei das erste Stegelement 2 und das zweite Stegelement 3 einen Sicherungsabschnitt 5 aufweisen, welcher zur Verdrehsicherung eines Schraubelements 62 einer Spreizkeileinheit 6 ausgelegt ist. Die Sicherungsabschnitte 5 der Bremsbacke 1 greifen dabei vorzugsweise formschlüssig in je einen korrespondierend ausgebildeten und angeordneten Eingriffsabschnitt 64 am Schraubelement 62 ein. Der Sicherungsabschnitt 5 bildet dabei gemeinsam mit dem Eingriffsabschnitt 64 jeweils eine Überlappung 7 mit einer Überlappungslänge L. Die Spreizkeileinheit 6 überträgt mit Vorteil über das Schraubelement 62 eine Bremskraft entlang einer Drehachse A, welche bei der in der Figur gezeigten Ausführungsform vorteilhafter Weise nach links weist, auf die Bremsbacke 1. Hierfür weist das Schraubelement 62 mit Vorteil eine Kraftübertragungsfläche 66 auf, welche mit einem entsprechendem Kraftübertragungsabschnitt 4 der Bremsbacke in Eingriff bringbar ist. Mit Vorteil sind sowohl der Kraftübertragungsabschnitt 4 als auch die Kraftübertragungsfläche 66 im Wesentlichen senkrecht zur Drehachse A ausgerichtet.

Fig. 2a zeigt eine Draufsicht entlang der Drehachse A auf eine bevorzugte Ausführungsform eines erfindungsgemäßen Schraubelements 62. Dieses weist zwei ebenensymmetrisch zueinander ausgebildete Eingriffsabschnitte 64 auf. Weiterhin weist das Schraubelement 62 an der zum Betrachter hinweisenden Stirnfläche des Schraubelements 62 eine Stützfläche 66. Fig. 2b zeigt die in Fig. 2a gezeigte Ausführungsform des Schraubelements 62 in Seitenansicht. Dabei ist die Erstreckung des Eingriffsabschnitts 64 verdeutlicht, wobei dieser vorzugsweise planar oder eben ausgebildet ist. Der Eingriffsabschnitt 64 stellt somit mit anderen Worten eine lokale Abflachung an dem ansonsten zylinderförmig bzw. bolzenförmig ausgebildeten Schraubelement 62 dar. Alternativ bevorzugt weist das Schraubelement 62 eine als Sechskant insbesondere Außensechskant ausgebildete Außengeometrie auf, wobei ein Eingriff mit dem Sicherungsabschnitt 5 in verschiedenen Einbaulagen des Schraubelements 62 möglich ist.

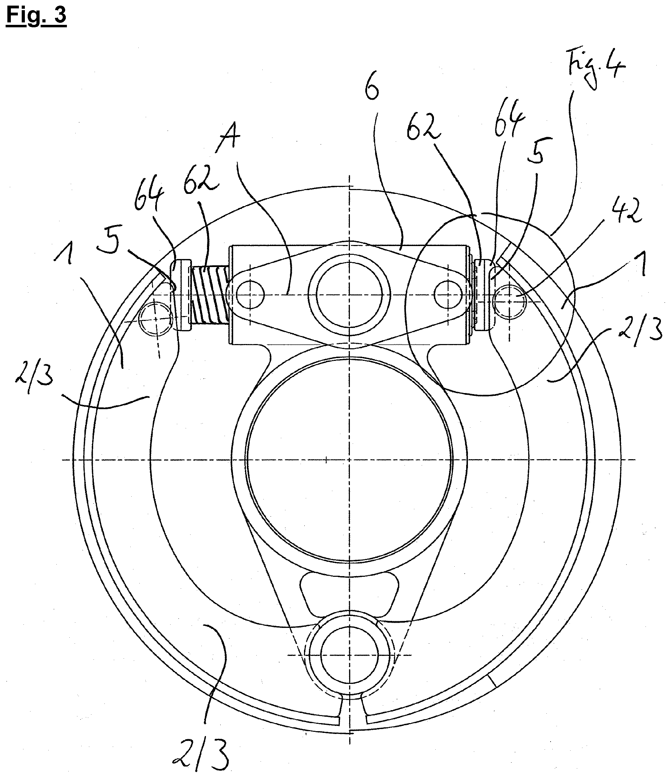

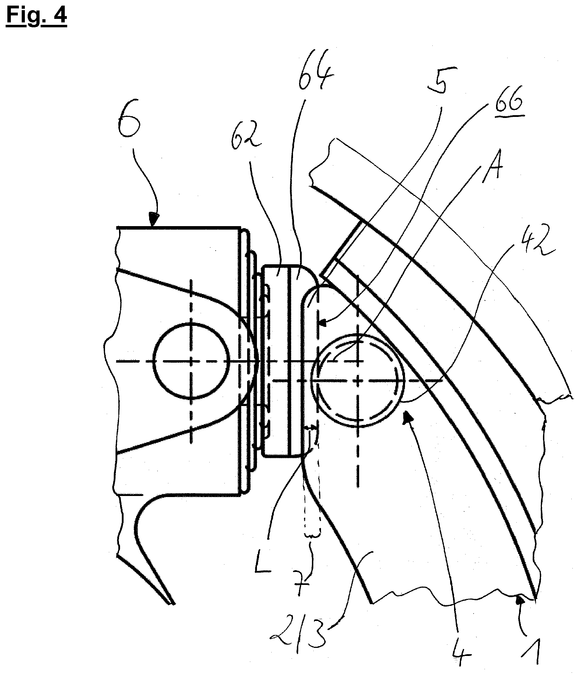

Fig. 3 zeigt eine bevorzugte Ausführungsform des Bremssystems wobei verdeutlicht ist, dass die Spreizkeileinheit in Eingriff mit zwei rechts und links von ihm angeordneten Bremsbacken 1 bringbar ist. Dabei ist die Bremsbacke 1 auf der linken Seite der Figur in ihrem maximal verschlissenen Zustand gezeigt während die rechts gezeigte Bremsbacke 1 mit frischen Bremsbelägen ausgestattet ist und somit näher an der Spreizkeileinheit 6 angeordnet ist als die links gezeigte Bremsbacke 1. Zwischen dem zum Betrachter hinweisenden ersten Stegelement 2 und dem Eingriffsabschnitt 64 des Schraubelements 62 der Spreizkeileinheit 6 ist ein Überlappungsbereich 7 (siehe Fig. 4) vorgesehen, in welchem der Sicherungsabschnitt 5 des ersten Stegelements 2 in formschlüssigen Eingriff mit dem Schraubelement 62 steht. Auf diese Weise wird das Schraubelement 62 gegen Verdrehung um die Drehachse A gesichert. Weiterhin ist bevorzugt dargestellt, dass die Spreizkeileinheit 6 an einem Bremsträger festgelegt und vorzugsweise einstückig mit diesem ausgebildet ist und über den Bremsträger an der Achse eines Nutzfahrzeuges festgelegt ist.

Fig. 4 zeigt eine Detailansicht der Ausführungsform von Fig. 3. Dabei ist insbesondere der Eingriffsbereich zwischen der Bremsbacke 1 und der Spreizkeileinheit 6 verdeutlicht, in welchem das Schraubelement 62 der Spreizkeileinheit 6 eine Betätigungskraft auf den Kraftübertragungsabschnitt 4 der Bremsbacke 1 überträgt. Das Schraubelement 62 weist einen Eingriffsabschnitt 64 auf, in den der Sicherungsabschnitt 5 des ersten und/oder des zweiten Stegelements 2, 3 eingreift um das Schraubelement 62 gegen Verdrehen um die Drehachse A zu sichern. Im Kraftübertragungsabschnitt 4 der Bremsbacke 1 ist vorzugsweise ein Wälzkörper 42 angeordnet, welcher die von der Spreizkeileinheit 6 aufgebrachte Kraft längs der Drehachse A an die Bremsbacke 1, vorzugsweise an das erste und das zweite Stegelement 2, 3 überträgt. Hierfür stützt sich der Wälzkörper 42 vorzugsweise rollend an der Stützfläche 66 des Schraubelements 62, wobei die bevorzugte Rollbewegung des Wälzkörpers 42 an der Stützfläche 66 weniger Reibung und Verschleiß verursacht als eine ansonsten auftretende Gleitreibung.

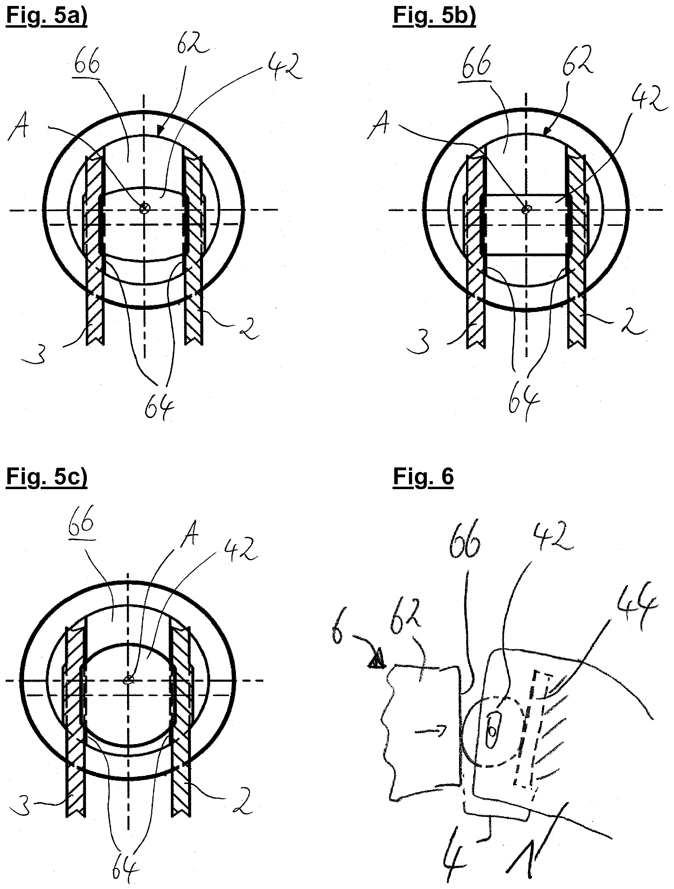

In Fig. 5a) - c) sind bevorzugte Ausführungsformen des Wälzkörpers 42 gezeigt. Der Wälzkörper 42 in Fig. 5a) ist leicht tonnenförmig ausgebildet und in Fig. 5b) zylinderförmig und in Fig. 5c) annähernd kugelförmig ausgebildet ist. In allen vier Darstellungen greift der Wälzkörper an der Stützfläche 66 des Schraubelements 62 an. Gleichzeitig sichert das erste Stegelement 2 und das zweite Stegelement 3 das Schraubelement 62 gegen Verdrehung um die zum Betrachter hinweisende Drehachse A.

Fig. 6 zeigt eine schematische Ansicht einer Ausführungsform eines Bremssystems, wobei an dem Kraftübertragungsabschnitt 4 der Bremsbacke 1 eine Platte 44 vorgesehen ist an welcher sich ein Wälzkörper 42 abstützt. Auf seiner, der Platte 44 gegenüberliegenden Seite wird der Wälzkörper vorzugsweise von der Betätigungseinheit 6 mit einer Kraft beaufschlagt. Bei der daraus folgenden Verlagerung und Verschwenkung der Bremsbacke 1 rollt der Wälzkörper 42 sowohl an der Platte 44, als auch an der Stützfläche 66 ab, wobei vorzugsweise keine Gleitreibung sondern nur Rollreibung auftritt. Um die Verlagerung des Wälzkörpers 42 relativ zur Bremsbacke 1 zu ermöglichen, ist der Wälzkörper 42 in einer als Langloch ausgebildeten Aussparung am ersten Stegelement 2 und/oder am zweiten Stegelement 3 geführt gelagert. Dabei ist der Wälzkörper 42 vorzugsweise derart lose in dem Langloch geführt, dass die Übertragung der Kraft von der Betätigungseinheit 6 zur Bremsbacke 1 im Wesentliche ausschließlich über die Stützfläche 66 und die Platte 44 erfolgt.

### Bezugszeichen:

- 1: - Bremsbacke
- 2: - erstes Stegelement
- 3: - zweites Stegelement
- 4: - Kraftübertragungsabschnitt
- 42: - Wälzkörper
- 44: - Platte
- 5: - Sicherungsabschnitt
- 6: - Betätigungseinheit
- 62: - Schraubelement
- 64: - Eingriffsabschnitt
- 66: - Stützfläche
- 7: - Überlappungsbereich
- L: - Überlappungslänge
- A: - Drehachse

## Patentansprüche

1. Bremssystem, insbesondere Spreizkeil-Trommelbremse, umfassend eine Bremsbacke (1) und eine Spreizkeileinheit (6),
wobei die Bremsbacke (1) ein erstes Stegelement (2) aufweist,
wobei die Spreizkeileinheit (6) ein Schraubelement (62) aufweist, welches um eine Drehachse (A) drehbar an der Spreizkeileinheit (6) angeordnet ist, wobei die Bremsbacke (1) einen Kraftübertragungsabschnitt (4) aufweist, welcher eine von der Spreizkeileinheit (6) aufgebrachte Bremskraft an die Bremsbacke (1) überträgt,
wobei ein zweites Stegelement (3) vorgesehen ist,
wobei das erste Stegelement (2) und das zweite Stegelement (3) je einen Sicherungsabschnitt (5) aufweisen, der das Schraubelement (62) gegen Verdrehung um die Drehachse (A) sichert,
wobei die Sicherungsabschnitte (5) vorzugsweise ebenensymmetrisch zu einer zwischen dem ersten und dem zweiten Stegelement (2, 3) angeordneten Ebene ausgebildet und ausgerichtet sind.

2. Bremssystem nach Anspruch 1,
wobei der Sicherungsabschnitt (5) keinen Anteil an der Übertragung der Bremskraft hat.

3. Bremssystem nach einem der vorhergehenden Ansprüche,
wobei der Sicherungsabschnitt (5) in einen Eingriffsabschnitt (64) am Schraubelement (62) eingreift,
wobei der Eingriffsabschnitt (64) eine geradlinige Erstreckung quer zur Drehachse (A) aufweist.

4. Bremssystem nach Anspruch 3,
wobei der Sicherungsabschnitt (5) und/oder der Eingriffsabschnitt (64) eine im Wesentlichen planare Fläche aufweist.

5. Bremssystem nach einem der vorhergehenden Ansprüche,
wobei der Kraftübertragungsabschnitt (4) an einer Stützfläche (66) des Schraubelements (62) zur Anlage bringbar ist,
wobei die Stützfläche (66) und/oder der Kraftübertragungsabschnitt (4) sich im Wesentlichen quer zur Drehachse (A) erstreckt.

6. Bremssystem nach einem der vorhergehenden Ansprüche,
wobei der Kraftübertragungsabschnitt (4) einen Wälzkörper (42) umfasst, welcher drehbar an der Bremsbacke (1) gelagert ist und an dem Schraubelement (62) abrollt.

7. Bremssystem nach Anspruch 6,
wobei der Wälzkörper (42) ausschließlich eine parallel zur Drehachse (A) wirkende Kraft vom Schraubelement (62) auf die Bremsbacke (1) überträgt.

8. Bremssystem nach einem der Ansprüche 6 oder 7,
wobei der Wälzkörper (42) sich an seiner dem Schraubelement (62) abgewandten Seite an einer Platte (44) abstützt,
wobei die Platte (44) die vom Wälzkörper (42) übertragene Bremskraft an die Bremsbacke (1) überträgt.

9. Bremssystem nach einem der vorhergehenden Ansprüche,
wobei zwischen dem Sicherungsabschnitt (5) und dem Eingriffsabschnitt (64) ein Überlappungsbereich (7) vorgesehen ist, der eine parallel zur Drehachse (A) gemessene Überlappungslänge (L) aufweist,
wobei die Überlappungslänge (L) 0,5 cm bis 8 cm, vorzugsweise 0,8 cm bis 4 cm und besonders bevorzugt ca. 1 cm - 1,5 cm beträgt.

## Claims

1. A braking system, especially wedge-actuated drum brakes, comprising a brake shoe (1) and a wedge unit (6),
wherein the brake shoe (1) comprises a first linking element (2), wherein the wedge unit (6) comprises a screw element (62), which is arranged able to turn about an axis of rotation (A) on the wedge unit (6), wherein the brake shoe (1) comprises a force transmitting portion (4), which transmits a braking force applied by the wedge unit (6) to the brake shoe (1), wherein a second linking element (3) is provided,
wherein the first linking element (2) and the second linking element (3) each comprise a securing portion (5), which secures the screw element (62) against being twisted about the axis of rotation (A),
wherein the securing portions (5) are configured and oriented preferably plane symmetrical to a plane situated between the first and the second linking elements (2, 3).

2. The braking system as claimed in claim 1,
wherein the securing portion (5) has no share in the transmitting of the braking force.

3. The braking system as claimed in one of the preceding claims,
wherein the securing portion (5) engages with an engaging portion (64) on the screw element (62),
wherein the engaging portion (64) has a straight extension transverse to the axis of rotation (A).

4. The braking system as claimed in claim 3,
wherein the securing portion (5) and/or the engaging portion (64) has a substantially planar surface.

5. The braking system as claimed in one of the preceding claims,
wherein the force transmitting portion (4) can be brought to bear against a supporting surface (66) of the screw element (62),
wherein the supporting surface (66) and/or the force transmitting portion (4) extend substantially transversely to the axis of rotation (A).

6. The braking system as claimed in one of the preceding claims,
wherein the force transmitting portion (4) comprises a rolling element (42), which is mounted rotatably on the brake shoe (1) and rolls along the screw element (62).

7. The braking system as claimed in claim 6,
wherein the rolling element (42) transmits only a force acting parallel to the axis of rotation (A) from the screw element (62) to the brake shoe (1).

8. The braking system as claimed in one of claims 6 or 7,
wherein the rolling element (42) is braced against a plate (44) on its side facing away from the screw element (62),
wherein the plate (44) transmits the braking force to the brake shoe (1) that has been transmitted by the rolling element (42).

9. The braking system as claimed in one of the preceding claims,
wherein between the securing portion (5) and the engaging portion (64) there is provided an overlapping region (7), having an overlapping length (L) measured parallel to the axis of rotation (A),
wherein the overlapping length (L) is 0.5 cm to 8 cm, preferably 0.8 cm to 4 cm and especially preferably around 1 cm to 1.5 cm.

## Revendications

1. Système de frein, en particulier frein à tambour à cale d'écartement, comportant une mâchoire de frein (1) et un ensemble à cale d'écartement (6),
dans lequel
la mâchoire de frein (1) comprend un premier élément formant âme (2), l'ensemble à cale d'écartement (6) comprend un élément de vissage (62) qui est agencé mobile en rotation autour d'un axe de rotation (A) sur l'ensemble à cale d'écartement (6),
la mâchoire de frein (1) comprend une portion de transmission de force (4) qui transmet à la mâchoire de frein (1) une force de freinage appliquée par l'ensemble à cale d'écartement (6),
il est prévu un second élément formant âme (3),
le premier élément formant âme (2) et le second élément formant âme (3) présentent chacun une portion de blocage (5) qui bloque l'élément de vissage (62) à l'encontre d'une rotation autour de l'axe de rotation (A),
les portions de blocage (5) sont réalisées et orientées de préférence de façon symétrique par rapport à un plan agencé entre le premier et le second élément formant âme (2, 3).

2. Système de frein selon la revendication 1,
dans lequel
la portion de blocage (5) ne contribue pas à la transmission de la force de freinage.

3. Système de frein selon l'une des revendications précédentes,
dans lequel
la portion de blocage (5) s'engage dans une portion d'engagement (64) sur l'élément de vissage (62), et
la portion d'engagement (64) présente une extension rectiligne transversalement à l'axe de rotation (A).

4. Système de frein selon la revendication 3,
dans lequel
la portion de blocage (5) et/ou la portion d'engagement (64) présente une surface sensiblement plane.

5. Système de frein selon l'une des revendications précédentes,
dans lequel
la portion de transmission de force (4) est susceptible de venir en appui contre une surface d'appui (66) de l'élément de vissage (62), et
la surface d'appui (66) et/ou la portion de transmission de force (4) s'étend sensiblement transversalement à l'axe de rotation (A).

6. Système de frein selon l'une des revendications précédentes,
dans lequel
la portion de transmission de force (4) comprend un corps de roulement (42) qui est monté mobile en rotation sur la mâchoire de frein (1) et qui roule sur l'élément de vissage (62).

7. Système de frein selon la revendication 6,
dans lequel
le corps de roulement (42) transmet exclusivement une force agissant parallèlement à l'axe de rotation (A) depuis l'élément de vissage (62) vers la mâchoire de frein (1).

8. Système de frein selon l'une des revendications 6 ou 7,
dans lequel
le corps de roulement (42) prend appui contre une plaque (44) sur son côté détourné de l'élément de vissage (62), et
la plaque (44) transmet à la mâchoire de freinage (1) la force de freinage transmise par le corps de roulement (42).

9. Système de frein selon l'une des revendications précédentes,
dans lequel
une zone de chevauchement (7) est prévue entre la portion de blocage (5) et la portion d'engagement (64), zone qui présente une longueur de chevauchement (L) mesurée parallèlement à l'axe de rotation (A), et
la longueur de chevauchement (L) est de 0,5 cm à 8 cm, de préférence de 0,8 cm à 4 cm et de manière particulièrement préférée d'environ 1 cm à 1,5 cm.
